# EUROPEAN PATENT SPECIFICATION

(11) **EP 3 064 869 B1**
(45) Date of publication and mention of the grant of the patent: **02.12.2020**
(21) Application number: 13896483.8
(22) Date of filing: 30.10.2013
(51) Int. Cl.: F25B 41/06, F16K 47/02

(54) **EXPANSION VALVE AND REFRIGERATION CYCLE DEVICE HAVING SAME MOUNTED THEREIN**
EXPANSIONSVENTIL UND KÄLTEKREISLAUFVORRICHTUNG DAMIT
SOUPAPE DE DILATATION ET DISPOSITIF À CYCLE DE RÉFRIGÉRATION DANS LEQUEL LADITE SOUPAPE DE DILATATION EST MONTÉE

(43) Date of publication of application: 07.09.2016
(73) Proprietor: Mitsubishi Electric Corporation, Tokyo 100-8310 (JP)
(72) Inventor: SHIMAZU, Yusuke, Tokyo 100-8310 (JP)
(74) Representative: Pfenning, Meinig & Partner mbB
(86) International application number: PCT/JP2013/079351
(87) International publication number: WO 2015/063876

(56) References cited:
- EP-A1- 2 034 259
- JP-A- H08 159 617
- JP-A- 2002 213 841
- JP-A- 2005 351 605
- JP-A- 2005 351 605
- JP-A- 2006 077 955
- JP-A- 2011 017 527
- JP-A- 2011 017 527

## Description

### Technical Field

The present invention relates to an expansion valve that reduces the pressure of a fluid and hence expands the fluid, and a refrigeration cycle including the expansion valve.

### Background Art

For example, in a refrigeration cycle device such as an air-conditioning device, an expansion valve that expands refrigerant condensed in a condenser is arranged between the condenser and an evaporator. There are suggested various technologies for reducing a refrigerant-caused noise sound (hereafter "refrigerant sound") that is generated from the expansion valve.

For example of such a technology, a dehumidification valve "in which a pulsation absorbing member that absorbs pulsation energy of refrigerant flowing in from the primary side joint to the valve chamber is arranged at the plunger side of the valve portion" is disclosed (see Patent Literature 1). With the dehumidification valve described in Patent Literature 1, a pressure-loss member (the pulsation absorbing member) is provided in an annular shape to be integrated with a valve body. By absorbing the pulsation energy of the refrigerant flowing in from a first pipe (the primary side joint), the refrigerant sound is reduced.

Also, an electronic expansion valve "in which the first refrigerant flow passage (11) is connected to the refrigerant flow-in chamber (3) in the direction substantially orthogonal to the axis of the refrigerant flow-in chamber, and in a state displaced in the radial direction of the refrigerant flow-in chamber with respect to the axis" is disclosed (for example, see Patent Literature 2). With the electronic expansion valve described in Patent Literature 2, by providing a refrigerant inlet (the first refrigerant passage) to be displaced with respect to a valve body (the axis), a sound of collision to the valve body and a noise caused by vibration of the valve body can be suppressed. Also, the electronic expansion valve described in Patent Literature 1 causes liquid refrigerant to flow into an expansion portion with a high priority by centrifugation. Even if air bubbles temporarily enter, the refrigerant sound is less likely generated. Document EP-A-2034259 discloses an expansion valve according to the preamble of claim 1.

### Citation List

### Patent Literature

Patent Literature 1: Japanese Unexamined Patent Application Publication No. 2013-104439 (Embodiments 1 to 7 and Fig. 3)
Patent Literature 2: Japanese Unexamined Patent Application Publication No. 8-159617 (Embodiment 1 and Figs. 1 and 2)

### Summary of Invention

### Technical Problem

With the dehumidification valve described in Patent Literature 1, the pressure-loss member is formed in a shape that substantially conforms to the outer shape of the valve body. The effect cannot be obtained unless the refrigerant flows into the pressure-loss member. Also, a columnar portion of the valve body when the valve body has a change in shape from the columnar portion (the valve shaft 3b) to a conical portion (the valve portion 3a) has the same shape as related art. For a portion immediately before the boundary portion between the columnar portion and the conical portion of the valve body, no measure is taken for making the flow of the refrigerant uniform.

With the electronic expansion valve described in Patent Literature 2, when two-phase refrigerant flows in constantly, gas refrigerant remaining in the valve body passes through the expansion portion without exception. At this time, a discontinuous refrigerant sound may be generated. Further, even if the gas-liquid ratio in the circumferential direction of the expansion portion is uniform, the gas-liquid ratio in the radial direction is liquid-rich at the outer circumference side, the liquid ratio decreases from the outer circumference side toward the inner periphery side, and the gas-liquid ratio is gas-rich at the inner periphery side. That is, since the refrigerant constantly flows into the expansion portion while the gas and liquid are constantly unevenly distributed in the radial direction of the expansion portion, the discontinuous refrigerant sound is likely generated.

The present invention is made in view of the above-described problems. An object of the present invention is to provide an expansion valve that reduces the refrigerant sound by making the gas-liquid ratio in the radial direction of the expansion portion uniform even when the two-phase refrigerant flows into the expansion valve, and to provide a refrigeration cycle device including the expansion valve.

### Solution to Problem

An expansion valve according to the present invention includes the features of claim 1.

A refrigeration cycle device according to the present invention includes a compressor, a condenser, a first expansion valve, a second expansion valve, and an evaporator connected in series by pipes; and the above-described expansion valve is applied as the second expansion valve to the refrigeration cycle device. Advantageous Effects of Invention

With the expansion valve according to the present invention, since the pressure-loss member is provided to protrude on the outer circumference of the valve body at the position including at least the juncture between the conical portion and the columnar portion constituting the valve body, the gas-liquid ratio in the radial direction of the expansion portion can be made uniform, and the reduction in refrigerant sound can be promoted.

With the refrigeration cycle device according to the present invention, since the above-described expansion valve is applied as the second expansion valve to the refrigerant cycle device, at least the refrigerant sound at the second expansion valve can be reduced.

### Brief Description of Drawings

[Fig. 1] Fig. 1 is a schematic longitudinal cross-sectional view showing a general configuration of an expansion valve according to Embodiment 1 of the present invention.
[Fig. 2] Fig. 2 shows a cross-section taken along the line A-A of Fig. 1.
[Fig. 3] Fig. 3 is a schematic longitudinal cross-sectional view showing a general configuration of a modification of the expansion valve according to Embodiment 1 of the present invention.
[Fig. 4] Fig. 4 shows a cross-section taken along the line A-A of Fig. 3.
[Fig. 5] Fig. 5 is a schematic diagram for describing a connection state of an expansion valve according to Embodiment 2 of the present invention with a first pipe.
[Fig. 6] Fig. 6 is a circuit diagram schematically showing a circuit configuration of a refrigeration cycle device according to Embodiment 3 of the present invention.

### Description of Embodiments

Embodiments 1 to 3 of the present invention are described below with reference to the drawings.

### Embodiment 1

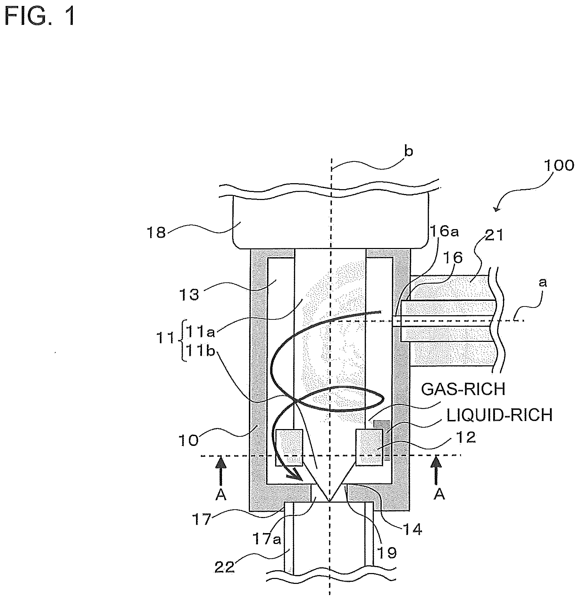

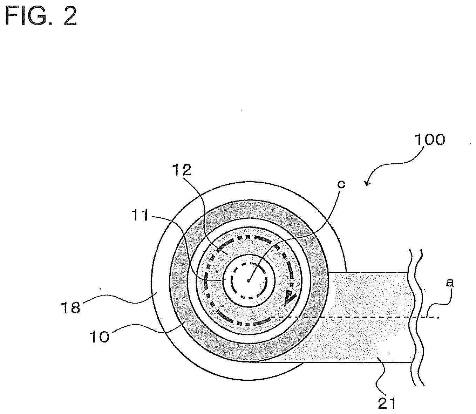

Fig. 1 is a schematic longitudinal cross-sectional view showing a general configuration of an expansion valve 100 according to Embodiment 1 of the present invention. Fig. 2 shows a cross-section taken along the line A-A of Fig. 1. A configuration and working of the expansion valve 100 are described with reference to Figs. 1 and 2. Fig. 2 also illustrates a first pipe 21 and a driving device 18 for convenience of understanding. Also, Figs. 1 and 2 illustrate the flow of a fluid with arrows. It is to be noted that in the following drawings including Fig. 1, the relationship in size among respective components may differ from the actual relationship in size. Also, in the following drawings including Fig. 1, components with the same reference sign are the same components or corresponding components. This is commonly applied to the whole text of the specification.

Fig. 1 illustrates a state in which the gravity acts downward of the paper face of the drawing. The expansion valve 100 has a function of reducing the pressure of a fluid such as refrigerant and hence expanding the refrigerant. The expansion valve 100 includes a vessel 10 formed by cutting a brass cast, a valve body 11 movably provided in the vessel 10, and an annular pressure-loss member 12 provided on an outer circumference of the valve body 11.

A valve chamber 13 is formed in the vessel 10. The fluid flows into the valve chamber 13, and the valve body 11 is provided in the valve chamber 13 to be able to advance and retract in the valve chamber 13. A fit portion 16 is formed in a side surface of the vessel 10. A first pipe 21 is fitted to the fit portion 16. The first pipe 21 communicates with the valve chamber 13 through a through hole 16a formed in the side surface of the vessel 10 at a position corresponding to the fit portion 16. That is, the through hole 16a functions as an inlet and an outlet of the flow of the fluid. A fit portion 17 is formed in a bottom portion of the vessel 10. A second pipe 22 is fitted to the fit portion 17. The second pipe 22 communicates with the valve chamber 13 through a through hole (an opening) 17a formed in the bottom portion of the vessel 10 at a position corresponding to the fit portion 17. That is, the through hole 17a functions as an inlet and an outlet of the flow of the fluid. The through hole 17a, and a peripheral edge at the valve chamber 13 side of the through hole 17a function as a valve seat 14.

The through hole 17a corresponds to an "opening" of the present invention.

The valve body 11 includes a columnar portion 11a and a conical portion 11b that are integrally formed. The valve body 11 is configured to be able to advance to and retract from the through hole 17a of the valve seat 14. The columnar portion 11a forms an upper portion of the valve body 11, and is coupled to the driving device 18. The conical portion 11b is inserted into and removed from the through hole 17a. Hence, the conical portion 11b and the valve seat 14 form an annular expansion portion 19. The columnar portion 11a does not have to be a strict column, depending on a fixing method of the columnar portion 11a to the pressure-loss member 12 connected on the outer circumference. Also, the conical portion 11b does not have to be a strict cone, and is only required to be a shape narrowing toward the distal end (a shape having a diameter decreased toward the distal end).

The driving device 18 that drives the valve body 11 is provided on the vessel 10. The driving device 18 causes the valve body 11 to move upward and downward in the valve chamber 13. Depending on the position of the valve body 11, the passage area (the cross-sectional area of the passage) of the expansion portion 19 being an annular fine passage formed of the valve seat 14 and the valve body 11 is changed. That is, depending on the position of the valve body 11, the opening degree of the through hole 17a is adjusted. In this case, the first pipe 21 is arranged so that the center of the first pipe 21 (an axis indicated by a dotted line "a" shown in Figs. 1 and 2) is displaced from the center of the valve body 11 and the valve chamber 13 (an axis indicated by a dotted line b in Fig. 1 and a dotted line c in Fig. 2).

The pressure-loss member 12 is provided on the outer circumference of the valve body 11 to protrude outward. Also, the pressure-loss member 12 is integrally connected with the valve body 11. The pressure-loss member 12 is connected to the outer circumference of the valve body 11. The outer circumference includes a juncture between the columnar portion 11a and the conical portion 11b of the valve body 11. Also, the pressure-loss member 12 is provided at a position to form a gap between a lower surface of the pressure-loss member 12 and a bottom surface of the valve chamber 13 even when the valve body 11 is at a lowermost position.

Also, the distance between the outer circumference of the pressure-loss member 12 and the inner wall of the valve chamber 13 is set to be smaller than the maximum width of gap in the radial direction of the expansion portion 19. The pressure-loss member 12 is a member having many interstices. For example, the pressure-loss member 12 is formed of a porous body, a metal foam, a mesh-like member, or other members. The interstices formed in the pressure-loss member 12 have smaller diameters than the maximum width of gap in the radial direction of the expansion portion 19. The form of the pressure-loss member 12 is not particularly limited to the porous body, metal foam, mesh-like member, or other members, and is described as a general name. Also, the porous body and the mesh-like member are preferably formed of a metal material or a resin material.

The first pipe 21 and the second pipe 22 are formed of, for example, copper pipes, and formed by brazing the first and second pipes 21 and 22 to the vessel 10 in a furnace.

### (Working of Expansion Valve 100)

Although detailed description is given in Embodiment 3, the expansion valve 100 is arranged upstream of an evaporator, as a component of a refrigeration cycle apparatus. Working of the expansion valve 100 in the case where two-phase gas-liquid refrigerant flows in from the first pipe 21 is described first.

The two-phase gas-liquid refrigerant flows into the valve chamber 13 of the expansion valve 100 from the first pipe 21. Since the first pipe 21 is arranged so that the center (the axis) thereof is displaced from the center (the axis) of the valve body 11 and the valve chamber 13, the two-phase gas-liquid refrigerant advancing in the first pipe 21 enters the valve chamber 13 to avoid the valve body 11, that is, without colliding with the valve body 11. Then, a turning flow around the valve body 11 is generated in the valve chamber 13, and hence liquid refrigerant tends to be unevenly distributed at the outer circumference side and gas refrigerant tends to be unevenly distributed at the inner periphery side.

The liquid refrigerant at the outer circumference side in the valve chamber 13 also moves toward the inner periphery side by a capillary phenomenon of the pressure-loss member 12 when passing through the pressure-loss member 12.

The gas refrigerant at the inner periphery side in the valve chamber 13 is mixed with the liquid refrigerant at the outer circumference side when passing through the pressure-loss member 12, and the gas-liquid ratio becomes close to the gas-liquid ratio at the outer circumference side. Alternatively, the gas refrigerant is output as gas refrigerant with air bubbles having small diameters.

Then, the refrigerant flows into the expansion portion 19 across a short distance.

That is, the gas-liquid ratio becomes uniform in the circumferential direction of the annular expansion portion 19 by the working of the centrifugal force, and the gas-liquid ratio also becomes uniform in the radial direction of the annular expansion portion 19 by the action of the pressure-loss member 12.

In general, when two-phase refrigerant flows into the expansion valve 100 from the first pipe 21, the distance from the inlet of the valve chamber 13 to the expansion portion 19 is a certain distance and the flow of the refrigerant is disturbed. Also, in the process that the flow of the refrigerant advances from the columnar portion 11a to the conical portion 11b of the valve body 11, the refrigerant passes through a discontinuous portion (the juncture between the columnar portion 11a and the conical portion 11b), and a disturbance may be likely generated. Owing to this, in the expansion valve 100, the pressure-loss member 12 is provided at this position. Accordingly, the pressure-loss member 12 makes the flow of the refrigerant uniform and suppresses the promotion of the disturbance.

If the flow velocity of the refrigerant is low, or if the inner diameter of the valve chamber 13 is small, the gas-liquid separation effect may not be sufficiently obtained. In contrast, in the expansion valve 100, the pressure-loss member 12 is provided immediately before the boundary portion between the columnar portion 11a and the conical portion 11b of the valve body 11 where the disturbance of the flow of the refrigerant is likely generated. Accordingly, the refrigerant in a state before the state in which the disturbance of the flow of the refrigerant is likely generated passes through the pressure-loss member 12. Even when it is expected that the gas-liquid separation effect is not sufficiently obtained, the gas-liquid separation performance can be prevented from being reduced.

An action of the expansion valve 100 at the time when liquid refrigerant flows in from the second pipe 22 is described next.

The liquid refrigerant flows into the valve chamber 13 of the expansion valve 100 from the second pipe 22. Since only the liquid refrigerant is present in the valve chamber 13, the refrigerant sound is not likely generated at the expansion portion 19. After the refrigerant passes through the expansion portion 19, gas refrigerant (air bubbles) is generated in a non-equilibrium state by cavitation or other phenomena. However, the diameters of the air bubbles are decreased when the air bubbles pass through the pressure-loss member 12. Then, the flow direction in the valve chamber 13 is changed from the vertical direction to the horizontal direction, and the refrigerant is discharged from the first pipe 21.

That is, when the two-phase refrigerant flows into the expansion valve 100 from the second pipe 22, the flow of the refrigerant passing through the expansion portion 19 advances outward by the conical portion 11b being a distal end portion of the valve body 11. Owing to this, since the pressure-loss member 12 is arranged in the advancement direction of the refrigerant, the gas-liquid ratio of the refrigerant can be made uniform, or the diameters of the air bubbles can be decreased. Accordingly, the refrigerant sound can be reduced.

### (Modification of Expansion Valve 100)

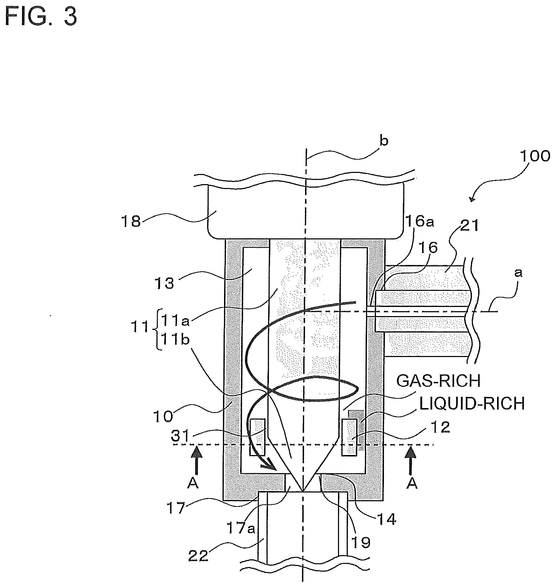

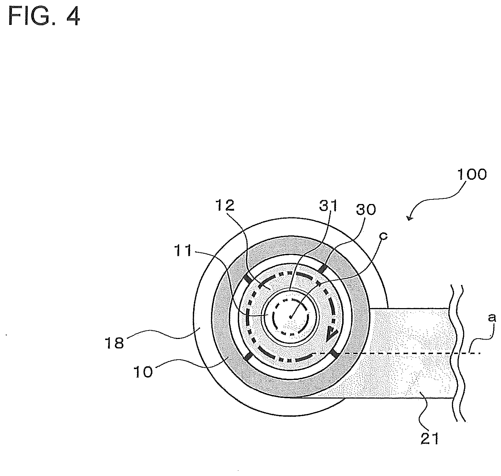

Fig. 3 is a schematic longitudinal cross-sectional view showing a general configuration of a modification of the expansion valve 100 according to Embodiment 1 of the present invention. Fig. 4 shows a cross-section taken along the line A-A in Fig. 3. A configuration of the modification of the expansion valve 100 is described with reference to Figs. 3 and 4. Fig. 3 also illustrates the first pipe 21 and the driving device 18 for convenience of understanding. Also, Figs. 3 and 4 illustrate the flow of a fluid with arrows.

Figs. 1 and 2 illustrate the example in which the pressure-loss member 12 is fixed to the valve body 11 and hence the pressure-loss member 12 and the valve body 11 are integrated. However, as shown in Figs. 3 and 4, the pressure-loss member 12 may be fixed to the inner wall of the vessel 10 by using a support member 30. Even if a gap (a gap 31 shown in Figs. 3 and 4) is present between the valve body 11 and the pressure-loss member 12, the gap 31 has no problem in practical use as long as the gap 31 is sufficiently small as compared with the flow passage area between the pressure-loss member 12 and the inside of the vessel 10. Alternatively, the sizes and shapes of the support member 30 and the pressure-loss member 12 may be determined not to form the gap 31.

### (Advantageous Effect Attained by Expansion Valve 100)

When the refrigerant flows in from the first pipe 21, the refrigerant flows into the valve chamber 13 without colliding with the valve body 11. Hence, the refrigerant sound caused by collision with the valve body 11 is unlikely generated, and a machine sound caused by vibration of the valve body 11 is reduced. Also, since the pressure-loss member 12 is provided on the outer circumference of the valve body 11, a decrease in rigidity of the valve body 11 can be suppressed, and a noise caused by the decrease in rigidity of the valve body 11 is reduced.

Further, by arranging the pressure-loss member 12, the outer circumference of the pressure-loss member 12 is surrounded by a liquid-rich component. This provides an effect of allowing a gas-rich component to pass through the pressure-loss member 12. In addition, by decreasing the diameters of the air bubbles in the gas-rich component, the gas-rich component easily passes. Also, by arranging the pressure-loss member 12, an effect of making the gas-liquid ratio uniform in the radial direction at the annular expansion portion 19 is provided.

It is to be noted that by providing the pressure-loss member 12, a pressure loss may be generated in the flow of the refrigerant, and the flow rate of the refrigerant may be decreased. Since the valve body 11 may be configured to be able to advance and retract, the position of the valve body 11 may be adjusted. However, in terms of practical use, it is not preferable if the adjustment amount have to be increased due to the provision of the pressure-loss member 12, or if the increased amount of adjustment exceeds the movable range in structure and the expansion valve itself is required to be increased in size.

However, the refrigerant flows into the valve chamber 13 without colliding with the valve body 11, and hence the amount of pressure loss at collision is decreased. Further, if the interstice ratio is increased while keeping the interstice diameter of the pressure-loss member 12 unchanged, the pressure loss of the pressure-loss member 12 is decreased. Accordingly, the aforementioned increase in adjustment amount and increase in size of the expansion valve can be suppressed.

Also, the interstices formed in the pressure-loss member 12 have smaller diameters than the maximum width of gap in the radial direction of the expansion portion 19. Hence, discontinuity of alternate liquid-rich flow and gas-rich flow in the radial direction of the expansion portion 19, that is, discontinuity such as a plug flow of being air bubbles, liquid phase, air bubbles, and then liquid phase can be solved, and a noise generated due to the discontinuity can be reduced.

Further, the distance between the outer circumference of the pressure-loss member 12 and the inner wall of the valve chamber 13 is set to be smaller than the maximum width of gap in the radial direction of the expansion portion 19. Hence, even if the liquid refrigerant flows into the expansion portion 19 without passing through the pressure-loss member 12, a phenomenon in which only the flow of the liquid refrigerant in the radial direction of the expansion portion 19 flows into the expansion portion 19 can be suppressed, and the refrigerant sound can be reduced.

As described above, with the expansion valve 100, the refrigerant sound at the expansion valve 100 is reduced. Also, a foreign substance or contamination generated by chemical reaction of a substance in a refrigeration cycle may be deposited in the pressure-loss member 12, and the inside of the pressure-loss member 12 may be closed. However, even if the interstices of the pressure-loss member 12 are closed, the gap is provided between the outer circumference of the pressure-loss member 12 and the inner wall of the valve chamber 13. Accordingly, a possibility that the refrigerant no longer flows is decreased. Also, the outer circumference diameter of the pressure-loss member 12 is larger than the outer diameter of the expansion portion 19. Hence, the flow passage area is not smaller than the area of the expansion portion 19. Owing to this, there is an advantage that the flow rate characteristic is unlikely changed. Further, the portion where the foreign substance and contamination are deposited is a portion where the flow is not smooth, such as a flow contraction. However, since the interstice ratio in the pressure-loss member 12 is high, the portion with not-smooth flow is small, and hence the foreign substance and contamination are unlikely deposited.

### Embodiment 2

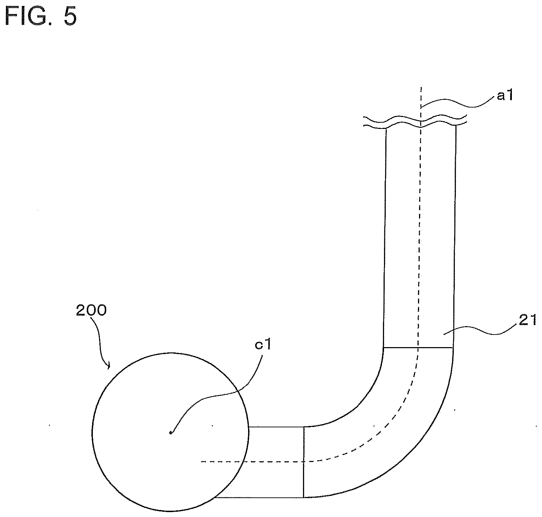

Fig. 5 is a schematic diagram for describing a connection state of an expansion valve 200 according to Embodiment 2 of the present invention with the first pipe 21. A configuration and an action of the expansion valve 200 are described with reference to Fig. 5. It is to be noted that in Embodiment 2, portions different from those of aforementioned Embodiment 1 are mainly described. A portion having the same action as that of Embodiment 1 is applied with the same reference sign, and the description is omitted.

The expansion valve 200 has a function of reducing a pressure of a fluid such as refrigerant and hence expanding the fluid, similarly to the expansion valve 100 according to Embodiment 1. The basic configuration of the expansion valve 200 is similar to that of the expansion valve 100 according to Embodiment 1. The first pipe 21 that is bent at a predetermined angle with respect to the flow direction of the fluid is connected to the expansion valve 200. The first pipe 21 is bent in a direction not to disturb the turning flow in the valve chamber 13. That is, the first pipe 21 is arranged so that the bending direction is a direction from the upper side toward the left side of the paper face, and the bending center is at the same side as the center (the axis) of the valve body 11 and the valve chamber 13 in a plane including the first pipe 21.

As described above, the expansion valve 200 attains an advantageous effect similar to that of the expansion valve 100 according to Embodiment 1, and the centrifugal force acting on the fluid at the first pipe 21 is added. Accordingly, the separation effect of the two-phase gas-liquid refrigerant is further enhanced, and the gas-liquid ratio in the circumferential direction of the expansion portion 19 can be further made uniform.

### Embodiment 3

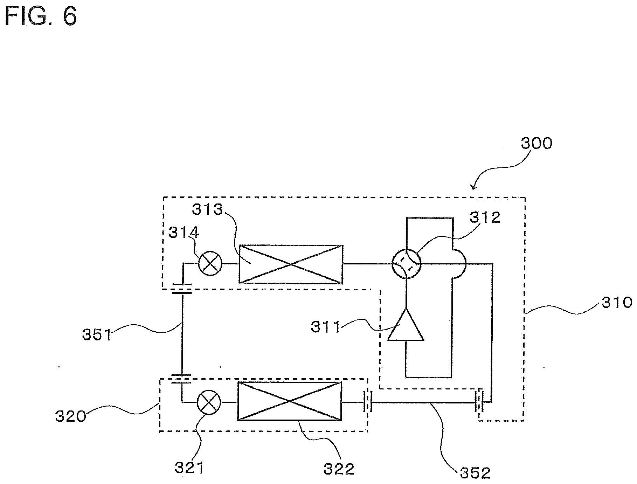

Fig. 6 is a circuit diagram schematically showing a circuit configuration of a refrigeration cycle device 300 according to Embodiment 3 of the present invention. A circuit configuration and an operation of the refrigeration cycle device 300 are described with reference to Fig. 6. The refrigeration cycle device 300 is used as, for example, an air-conditioning device that can execute, for example, cooling operation or heating operation by using a refrigeration cycle that circulates refrigerant being a fluid. Also, the refrigeration cycle device 300 includes the expansion valve 100 according to Embodiment 1 or the expansion valve 200 according to Embodiment 2 as a component of the refrigeration cycle. In the following description, it is assumed that the expansion valve 100 according to Embodiment 1 is included.

As shown in Fig. 6, the refrigeration cycle device 300 includes an outdoor unit (a heat source unit) 310, an indoor unit (a load-side unit) 320, and refrigerant pipes (a liquid pipe 351 and a gas pipe 352) connecting these units. The outdoor unit 310 includes a compressor 311 that compresses refrigerant to be at high temperature and high pressure, a four-way valve 312 being a flow switching device that switches the flow of the refrigerant, an outdoor heat exchanger 313 that functions as a condenser or an evaporator, and a first expansion valve 314 that reduces the pressure of the refrigerant. The indoor unit 320 includes a second expansion valve 321 that reduces the pressure of the refrigerant, and an indoor heat exchanger 322 that functions as an evaporator or a condenser.

The operation of the refrigeration cycle device 300 is described.

### (Cooling Operation)

In cooling operation, as shown in Fig. 6, the four-way valve 312 is connected as indicated by solid lines. The compressor 311 compresses the refrigerant of low-pressure gas flowing in to the compressor 311 and makes high-pressure gas. The outdoor heat exchanger 313 functions as a condenser, and transfers the energy of the refrigerant to a heat source (the air or water). That is, the refrigerant flowing in to the outdoor heat exchanger 313 is condensed at the outdoor heat exchanger 313 and becomes high-pressure liquid refrigerant. This refrigerant passes through the first expansion valve 314 and becomes medium-pressure two-phase refrigerant. The refrigerant passes through the liquid pipe 351, is reduced in pressure at the second expansion valve 321, hence becomes low-pressure two-phase refrigerant, and flows into the indoor heat exchanger 322.

The indoor heat exchanger 322 functions as an evaporator, and causes the refrigerant to absorb the energy of the water or air at the load side. That is, the refrigerant flowing in to the indoor heat exchanger 322 is evaporated at the indoor heat exchanger 322 and becomes low-pressure gas refrigerant. The water or air at the load side flowing in to the indoor heat exchanger 322 is cooled by exchanging heat with the refrigerant. The refrigerant flowing out from the indoor heat exchanger 322 then passes through the gas pipe 352 and forms a cycle to return to the compressor 311.

Since the two expansion valves are connected, the refrigerant becomes the medium-pressure two-phase refrigerant at the liquid pipe 351. Accordingly, the density is decreased as compared with the liquid refrigerant, and the refrigerant amount required in the refrigeration cycle can be decreased. To meet the demand on reduction in the global warming potential (GWP) of refrigerant in recent years, the refrigerant amount is also required to be decreased. The change of the refrigerant into the two-phase refrigerant at the liquid pipe 351 contributes to preventing the global warming.

### (Heating Operation)

In heating operation, as shown in Fig. 6, the four-way valve 312 is connected as indicated by broken lines. The compressor 311 compresses the refrigerant of low-pressure gas flowing in to the compressor 311 and hence makes high-pressure gas. This refrigerant passes through the gas pipe 352, and flows into the indoor heat exchanger 322. The indoor heat exchanger 322 functions as a condenser, and transfers the energy of the refrigerant to the air or water at the load side. That is, the refrigerant flowing in to the indoor heat exchanger 322 is condensed at the indoor heat exchanger 322 and becomes the high-pressure liquid refrigerant. The water or air at the load side flowing in to the indoor heat exchanger 322 is heated by exchanging heat with the refrigerant.

The refrigerant flowing out from the indoor heat exchanger 322 is reduced in pressure at the second expansion valve 321 and becomes the medium-pressure two-phase refrigerant. This refrigerant passes through the liquid pipe 351, passes through the first expansion valve 314, and flows into the outdoor heat exchanger 313. The outdoor heat exchanger 313 functions as an evaporator, and causes the refrigerant to absorb the energy of the water or air at the heat source side. That is, the refrigerant flowing in to the outdoor heat exchanger 313 is evaporated at the outdoor heat exchanger 313 and becomes the low-pressure gas refrigerant. The water or air at the heat source side flowing in to the outdoor heat exchanger 313 is cooled by exchanging heat with the refrigerant. The refrigerant flowing out from the outdoor heat exchanger 313 then forms a cycle to return to the compressor 311.

Similarly to the cooling operation, even in the heating operation, the refrigerant can be changed to the two-phase refrigerant at the liquid pipe 351. Accordingly, an advantageous effect similar to the cooling operation can be obtained.

In general, the refrigerant sound is recognized as a problem at the indoor unit 320 side because the indoor unit 320 is arranged at a position close to a user. Owing to this, the expansion valve 100 according to Embodiment 1 is preferably used as the second expansion valve 321 of the refrigeration cycle device 300. However, even in a case of the first expansion valve 314, the noise reducing effect can be obtained. Therefore, the expansion valve 100 according to Embodiment 1 may be used as the first expansion valve 314. Also, the expansion valve 100 according to Embodiment 1 may be applied to both the first expansion valve 314 and the second expansion valve 321.

Described below is a case in which the expansion valve 100 according to Embodiment 1 is applied to the second expansion valve 321. The liquid pipe 351 is connected as the first pipe 21 to the second expansion valve 321, and the pipe connected to the indoor heat exchanger 322 is connected as the second pipe 22 to the second expansion valve 321.

In general, the refrigerant sound is larger when two-phase gas-liquid refrigerant flows into an expansion valve as compared with liquid refrigerant. Also, the refrigerant sound when the refrigerant flows in from the first pipe 21 and the refrigerant flows out from the second pipe 22 has a smaller noise value than the other way. Owing to this, the liquid pipe 351 to which the two-phase refrigerant flows in is typically the first pipe 21. However, the other way also provides the noise reducing effect. Hence, the liquid pipe 351 may be the second pipe 22.

### (Cooling Operation)

The refrigerant flows into the second expansion valve 321 from the first pipe 21, and the refrigerant flows out from the second expansion valve 321 to the second pipe 22. Hence, in the cooling operation, the two-phase gas-liquid refrigerant flows into the second expansion valve 321 from the first pipe 21. Since the first pipe 21 is arranged so that the center (the axis) thereof is displaced from the center (the axis) of the valve body 11 and the valve chamber 13, the two-phase gas-liquid refrigerant enters the valve chamber 13 without colliding with the valve body 11. The turning flow around the valve body 11 is generated in the valve chamber 13, and hence liquid refrigerant tends to be unevenly distributed at the outer circumference side and gas refrigerant tends to be unevenly distributed at the inner periphery side.

Then, as described in Embodiment 1, the gas-liquid ratio is made uniform in the circumferential direction of the annular expansion portion 19 by the action of the centrifugal force, and the gas-liquid ratio is also made uniform in the radial direction of the annular expansion portion 19 by the action of the pressure-loss member 12.

### (Heating Operation)

The refrigerant flows into the second expansion valve 321 from the second pipe 22, and the refrigerant flows out from the second expansion valve 321 to the first pipe 21. Hence, in the heating operation, the liquid refrigerant flows into the second expansion valve 321 from the second pipe 22. Since only the liquid refrigerant is present in the second expansion valve 321, the refrigerant sound is not likely generated at the expansion portion 19. Also, as described in Embodiment 1, the diameters of the air bubbles are decreased when passing through the pressure-loss member 12.

### (Advantageous Effect Attained by Refrigeration Cycle Device 300)

With the refrigeration cycle device 300, since the expansion valve 100 according to Embodiment 1 is applied to the second expansion valve 321 included in the refrigeration cycle device 300, the refrigerant sound caused by the vibration of the valve body 11 is reduced. Also, the noise caused by the decrease in rigidity of the valve body 11 is reduced. Further, there is an effect of allowing the gas-rich component to pass by the pressure-loss member 12. In addition, by decreasing the diameters of the air bubbles in the gas-rich component, the gas-rich component easily passes. Also, with the pressure-loss member 12, an effect of making the gas-liquid ratio uniform in the radial direction at the annular expansion portion 19 is provided. Accordingly, the discontinuity of alternate liquid-rich flow and gas-rich flow can be solved.

As described above, with the refrigeration cycle device 300, at least the refrigerant sound at the second expansion valve 321 is reduced. If the expansion valve 100 according to Embodiment 1 is also applied to the first expansion valve 314, the noise reducing effect can be further obtained.

### Reference Signs List

10 vessel 11 valve body 11a columnar portion 11b conical portion 12 pressure-loss member 13 valve chamber 14 valve seat 16 fit portion 16a through hole 17 fit portion 17a through hole 18 driving device 19 expansion portion 21 first pipe 22 second pipe 30 support member 31 gap 100 expansion valve 200 expansion valve 300 refrigeration cycle device 310 outdoor unit 311 compressor 312 four-way valve 313 outdoor heat exchanger 314 first expansion valve 320 indoor unit 321 second expansion valve 322 indoor heat exchanger 351 liquid pipe 352 gas pipe

## Claims

1. An expansion valve (100, 200) comprising:
a vessel (10);
a valve chamber (13) formed in the vessel (10);
a valve seat (14) formed in the vessel (10) and having an opening communicating with the valve chamber (13);
a valve body (11) having a conical portion (11b) and a columnar portion (11a), and configured to advance to and retract from the opening of the valve seat (14), to adjust an opening degree of the opening; and **characterised by** a pressure-loss member (12) having an annular shape and provided to protrude on a portion on an outer circumference of the valve body (11), the portion including at least a juncture between the conical portion (lib) and the columnar portion (11a) of the valve body (11),
wherein the pressure-loss member (12) is positioned to form a gap between a lower surface of the pressure-loss member (12) and a bottom surface of the valve chamber (13) when the valve body (11) is at a lowermost position.

2. The expansion valve (100, 200) of claim 1,
wherein the pressure-loss member (12) is porous with interstices, and each of the interstices has a diameter smaller than a maximum width of gap of an expansion portion, the expansion portion being formed by the valve seat (14) and the valve body (11).

3. The expansion valve (100, 200, 314, 321) of claim 2,
wherein a distance between the pressure-loss member (12) and an inner wall of the valve chamber (13) is smaller than the maximum width of gap of the expansion portion formed by the valve seat (14) and the valve body (11).

4. The expansion valve (100, 200) of any one of claims 1 to 3,
wherein the pressure-loss member (12) is integrally formed with the valve body (11).

5. The expansion valve (100, 200) of any one of claims 1 to 3,
wherein the pressure-loss member (12) is fixed to an inner wall of the vessel (10) by a support member (30).

6. The expansion valve (100, 200) of any one of claims 1 to 5,
wherein an outer circumference of the pressure-loss member (12) is surrounded by a liquid-rich component of two-phase gas-liquid refrigerant, wherein the valve chamber (13) is suitable for turning the liquid-rich component of two-phase gas-liquid refrigerant.

7. The expansion valve (100, 200) of any one of claims 1 to 6, wherein
a first pipe (21) communicating with the valve chamber (13) is connected to a side surface of the vessel (10) and a second pipe (22) communicating with the valve chamber (13) is connected to a bottom portion of the vessel (10),
the valve chamber (13), the valve body (11), and the valve seat (14) are positioned coaxially, and
the first pipe (21) is connected to the side surface of the vessel (10) with an axis of the first pipe (21) being displaced from an axis of the valve chamber (13), the valve body (11), and the valve seat (14).

8. A refrigeration cycle apparatus (300) including a compressor (311), a condenser (313, 322), a first expansion valve (314), a second expansion valve (321), and an evaporator (322, 313) connected in series by pipes, the second expansion valve (321) being the expansion valve (100, 200) of any one of claims 1 to 7.

## Patentansprüche

1. Expansionsventil (100, 200), umfassend:
einen Behälter (10);
eine Ventilkammer (13), die in dem Behälter (10) ausgebildet ist;
einen Ventilsitz (14), der in dem Behälter (10) ausgebildet ist und eine Öffnung aufweist, die mit der Ventilkammer (13) kommuniziert;
einen Ventilkörper (11), der einen konischen Abschnitt (11b) und einen säulenförmigen Abschnitt (11a) aufweist, und eingerichtet ist, sich zu der Öffnung des Ventilsitzes (14) hin zu bewegen und sich von dieser zurückzuziehen, um einen Öffnungsgrad der Öffnung anzupassen; und **gekennzeichnet durch**
ein Druckverlustelement (12), das eine Ringform aufweist und vorgesehen ist, an einem Abschnitt an einem Außenumfang des Ventilkörpers (11) vorzustehen, wobei der Abschnitt mindestens eine Verbindungsstelle zwischen dem konischen Abschnitt (11b) und dem säulenförmigen Abschnitt (11a) des Ventilkörpers (11) aufweist,
wobei das Druckverlustelement (12) positioniert ist, um einen Spalt zwischen einer unteren Fläche des Druckverlustelements (12) und einer Bodenfläche der Ventilkammer (13) zu bilden, wenn sich der Ventilkörper (11) in einer untersten Position befindet.

2. Expansionsventil (100, 200) nach Anspruch 1,
wobei das Druckverlustelement (12) porös mit Zwischenräumen ist und jeder der Zwischenräume einen Durchmesser aufweist, der kleiner als eine maximale Spaltbreite eines Expansionsabschnitts ist, wobei der Expansionsabschnitt durch den Ventilsitz (14) und den Ventilkörper (11) gebildet wird.

3. Expansionsventil (100, 200, 314, 321) nach Anspruch 2,
wobei ein Abstand zwischen dem Druckverlustelement (12) und einer Innenwand der Ventilkammer (13) kleiner als die maximale Spaltbreite des Expansionsabschnitts ist, der durch den Ventilsitz (14) und den Ventilkörper (11) gebildet wird.

4. Expansionsventil (100, 200) nach einem der Ansprüche 1 bis 3,
wobei das Druckverlustelement (12) integral mit dem Ventilkörper (11) ausgebildet ist.

5. Expansionsventil (100, 200) nach einem der Ansprüche 1 bis 3,
wobei das Druckverlustelement (12) an einer Innenwand des Behälters (10) durch ein Stützelement (30) befestigt ist.

6. Expansionsventil (100, 200) nach einem der Ansprüche 1 bis 5,
wobei ein äußerer Umfang des Druckverlustelements (12) von einer flüssigkeitsreichen Komponente eines zweiphasigen Gas-Flüssigkeit-Kältemittels umgeben ist, wobei die Ventilkammer (13) zum Abzweigen der flüssigkeitsreichen Komponente des zweiphasigen Gas-Flüssigkeit-Kältemittels geeignet ist.

7. Expansionsventil (100, 200) nach einem der Ansprüche 1 bis 6, wobei
eine erste Leitung (21), die mit der Ventilkammer (13) kommuniziert, mit einer Seitenfläche des Behälters (10) verbunden ist, und eine zweite Leitung (22), die mit der Ventilkammer (13) kommuniziert, mit einem Bodenabschnitt des Behälters (10) verbunden ist,
die Ventilkammer (13), der Ventilkörper (11) und der Ventilsitz (14) koaxial positioniert sind, und
die erste Leitung (21) mit der Seitenfläche des Behälters (10) verbunden ist, wobei eine Achse der ersten Leitung (21) gegenüber einer Achse der Ventilkammer (13), des Ventilkörpers (11) und des Ventilsitzes (14) versetzt ist.

8. Kältekreisvorrichtung (300), aufweisend einen Verdichter (311), einen Verflüssiger (313, 322), ein erstes Expansionsventil (314), ein zweites Expansionsventil (321), und einen Verdampfer (322, 313), die in Reihe durch Leitungen verbunden sind,
wobei das zweite Expansionsventil (321) das Expansionsventil (100, 200) nach einem der Ansprüche 1 bis 7 ist.

## Revendications

1. Soupape de dilatation (100, 200) comprenant :
un récipient (10) ;
une chambre de soupape (13) formée dans le récipient (10) ;
un siège de soupape (14) formé dans le récipient (10) et ayant une ouverture communiquant avec la chambre de soupape (13) ;
un corps de soupape (11) ayant une partie conique (11b) et une partie colonnaire (11a) et configuré pour avancer vers et se rétracter de l'ouverture du siège de soupape (14), pour ajuster un degré d'ouverture de l'ouverture ; et **caractérisée par** :
un élément de perte de charge (12) ayant une forme annulaire et prévu pour faire saillie sur une partie sur une circonférence externe du corps de soupape (11), la partie comprenant au moins une jonction entre la partie conique (11b) et la partie colonnaire (11a) du corps de soupape (11),
dans laquelle l'élément de perte de charge (12) est positionné afin de former un espace entre une surface inférieure de l'élément de perte de charge (12) et une surface inférieure de la chambre de soupape (13) lorsque le corps de soupape (11) est dans la position la plus basse.

2. Soupape de dilatation (100, 200) selon la revendication 1,
dans laquelle l'élément de perte de charge (12) est poreux avec des interstices, et chacun des interstices a un diamètre inférieur à une largeur maximale de l'espace d'une partie de dilatation, la partie de dilatation étant formée par le siège de soupape (14) et le corps de soupape (11).

3. Soupape de dilatation (100, 200, 314, 321) selon la revendication 2,
dans laquelle une distance entre l'élément de perte de charge (12) et une paroi interne de la chambre de soupape (13) est inférieure à la largeur maximale de l'espace de la partie de dilatation formée par le siège de soupape (14) et le corps de soupape (11).

4. Soupape de dilatation (100, 200) selon l'une quelconque des revendications 1 à 3,
dans laquelle l'élément de perte de charge (12) est venu de matière avec le corps de soupape (11).

5. Soupape de dilatation (100, 200) selon l'une quelconque des revendications 1 à 3,
dans laquelle l'élément de perte de charge (12) est fixé sur une paroi interne du récipient (10) par un élément de support (30).

6. Soupape de dilatation (100, 200) selon l'une quelconque des revendications 1 à 5,
dans laquelle une circonférence externe de l'élément de perte de charge (12) est entourée par une partie riche en liquide d'un réfrigérant gaz-liquide biphasique, dans lequel la chambre de soupape (13) est appropriée pour faire tourner la partie riche en liquide du réfrigérant gaz-liquide biphasique.

7. Soupape de dilatation (100, 200) selon l'une quelconque des revendications 1 à 6, dans laquelle :
un premier tuyau (21) communiquant avec la chambre de soupape (13) est raccordé avec une surface latérale du récipient (10) et un second tuyau (22) communiquant avec la chambre de soupape (13) est raccordé à une partie inférieure du récipient (10),
la chambre de soupape (13), le corps de soupape (11) et le siège de soupape (14) sont positionnés de manière coaxiale, et
le premier tuyau (21) est raccordé à la surface latérale du récipient (10) avec un axe du premier tuyau (21) qui est décalé par rapport à un axe de la chambre de soupape (13), du corps de soupape (11) et du siège de soupape (14).

8. Appareil à cycle de réfrigération (300) comprenant un compresseur (311), un condenseur (313, 322), une première soupape de dilatation (314), une seconde soupape de dilatation (321) et un évaporateur (322, 313), raccordés en série par les tuyaux,
la seconde soupape de dilatation (321) étant la soupape de dilatation (100, 200) selon l'une quelconque des revendications 1 à 7.
